# EUROPÄISCHE PATENTSCHRIFT

(11) **EP 1 876 047 B1**
(45) Veröffentlichungstag und Bekanntmachung des Hinweises auf die Patenterteilung: **10.03.2010**
(21) Anmeldenummer: 07012234.6
(22) Anmeldetag: 22.06.2007
(51) Int. Cl.: B60J 5/04

(54) **Kraftfahrzeugtür mit einer Türinnenbetätigung**
Motor vehicle door with an inner door actuator
Porte de véhicule automobile dotée d'une poignée intérieure

(30) Priorität: 08.07.2006 DE 102006031668
(43) Veröffentlichungstag der Anmeldung: 09.01.2008
(73) Patentinhaber: Dr. Ing. h.c. F. Porsche Aktiengesellschaft, 70435 Stuttgart (DE)
(72) Erfinder: Schmitz, Stefan, 72072 Tübingen (DE); Luik, Klaus, 75417 Muehlacker (DE)

(56) Entgegenhaltungen:
- DE-C1- 19 809 613
- JP-A- 8 119 034
- JP-A- 2005 238 953

## Beschreibung

Die vorliegende Erfindung betrifft eine Kraftfahrzeugtür mit einer Türinnenbetätigung zur Türentriegelung gemäß dem Oberbegriff des Anspruchs 1.

Aus der DE 201 18 113 U1 ist eine Kraftfahrzeugtür mit einem aus mehreren Teilen bestehenden Innenverkleidungsmodul bekannt, welches auf einem in der Türkarosserie zu befestigenden Aggregateträger vormontiert ist und welches mindestens eine Aussparung zur Aufnahme einer Funktionseinheit, beispielsweise einer Beleuchtungseinrichtung, oder dergleichen aufweist. Dabei deckt die Funktionseinheit wenigstens eine Befestigungsstelle für die Montage des Aggregateträgers in der Türkarosserie ab bzw. gibt bei Entnahme der Funktionseinheit die wenigstens eine Befestigungsstelle frei.

Weitere Kraftfahrzeugtüren mit Beleuchtungseinrichtungen sind beispielsweise aus der DE 199 36 597 C2, aus der DE 195 24 602 C2, aus der DE 39 08 995 C2 und aus der DE 200 00 644 U1 bekannt.

Die JP 08 1190034A offenbart eine Kraftfahrzeugtür mit einer mindestens ein Leuchtmittel aufweisenden Beleuchtungseinrichtung, wobei die Beleuchtungseinrichtung zwischen einer Einfahrposition und einer Ausfahrposition verstellbar an der Kraftfahrzeugtür gelagert ist. Die Türinnenbetätigung ist mit dieser Beleuchtungseinrichtung nicht beleuchtbar.

Da bei modernen Kraftfahrzeugen die Funktionalität einzelner Komponenten bereits im Entwicklungsstadium immer mehr in den Vordergrund gestellt wird und gleichzeitig ein Bauraumangebot, d.h. frei zur Verfügung stehender Bauraum, immer stärker eingeschränkt ist, stellen sich Funktionselemente, wie beispielsweise Beleuchtungseinrichtungen, welche lediglich eine einzige Funktion erfüllen können, zunehmend als nachteilig heraus.

Die vorliegende Erfindung beschäftigt sich mit dem Problem, für eine Kraftfahrzeugtür der eingangs erwähnten Art eine verbesserte Ausführungsform anzugeben, bei welcher insbesondere eine Beleuchtungseinrichtung mehrere Funktionen erfüllt.

Dieses Problem wird durch den Gegenstand des unabhängigen Anspruches 1 gelöst. Vorteilhafte Ausführungsformen sind Gegenstand der abhängigen Ansprüche.

Die vorliegende Erfindung beruht auf dem allgemeinen Gedanken, eine Beleuchtungseinrichtung schwenkbar an einer Kraftfahrzeugtür zu lagern, wobei sie zwischen zwei Schwenkendstellungen, nämlich einer Einfahrposition und einer Ausfahrposition verstellbar ist. In ihrer Einfahrposition beleuchtet die Beleuchtungseinrichtung ausschließlich die Türinnenbetätigung, während sie in ihrer Ausfahrposition ausschließlich einen Innenraum des Kraftfahrzeugs beleuchtet. Die Beleuchtungseinrichtung erfüllt somit zwei Funktionen, nämlich in der Einfahrposition die Funktion einer Ambientebeleuchtung für die Türinnenbetätigung und in der Ausfahrposition beispielsweise die Funktion einer Leselampe. Durch die erfindungsgemäße Beleuchtungseinrichtung können somit zwei unterschiedliche Beleuchtungsfunktionen mit lediglich einer einzigen Beleuchtungseinrichtung realisiert werden, wodurch zum einen eine, die jeweils andere Beleuchtungsfunktion erfüllende Beleuchtungseinrichtung entfallen kann und dadurch Kosten reduziert werden können und zum anderen ein insbesondere im Fahrzeuginnenraum stark eingegrenztes Bauraumangebot besser ausgenutzt werden kann.

Zweckmäßig weist die Türinnenbetätigung eine Griffschale auf, wobei die Beleuchtungseinrichtung benachbart zu dieser Griffschale angeordnet ist und in ihrer Einfahrposition durch einen Durchbruch in der Griffschale die Türinnenbetätigung beleuchtet. Der Durchbruch in der Griffschale erzeugt somit eine indirekte Beleuchtung der Griffschale, was sich insbesondere angenehm auf ein dadurch erzeugtes Ambiente auswirkt, da eine Blendwirkung des Leuchtmittels der Beleuchtungseinrichtung ausgeschlossen werden kann. Denkbar ist hierbei auch, dass der Durchbruch beispielsweise von einer farbigen, transparenten Folie verschlossen ist, so dass die Farbe des von dem Leuchtmittel ausgesandten Lichtes in der Einfahr- bzw. der Ausfahrposition unterschiedlich ist. Hier kann beispielsweise vorgesehen sein, dass in der Ausfahrposition helles Licht ausgesandt wird, was ein Lesen erleichtert, während in der Einfahrposition das helle Licht durch die entsprechend gestaltete, farbige Folie gedämpft wird.

Zweckmäßig ist ein Leuchtmittel der Beleuchtungseinrichtung in der Einfahrposition im Vergleich zur Ausfahrposition gedimmt. Dies kann beispielsweise über eine elektronische Steuerung oder aber über eine Größe des in der Griffschale vorgesehenen Durchbruches realisiert werden, so dass im ersten Fall die Leistung des Leuchtmittels in der Einfahrposition im Vergleich zur Ausfahrposition reduziert ist, während im zweiten Fall die Leistung des Leuchtmittels nicht reduziert wird, jedoch nur ein prozentualer Anteil der Lichtleistung durch die entsprechend dimensionierte Öffnung in der Griffschale die Türinnenbetätigung beleuchtet.

Bei einer vorteilhaften Ausführungsform der erfindungsgemäßen Lösung ist eine Federeinrichtung vorgesehen, welche die Beleuchtungseinrichtung in ihre Ausfahrposition vorspannt. Dabei kann ein Auslösen der Federeinrichtung und damit ein Ausfahren der Beleuchtungseinrichtung beispielsweise mittels eines einfachen Tipp-Tasters realisiert werden, so dass nach einem kurzen Antippen der Beleuchtungseinrichtung in deren Einfahrposition, die Beleuchtungseinrichtung selbständig in ihre Ausfahrposition verfährt. Denkbar ist hierbei auch, dass die Ausfahrbewegung der Beleuchtungseinrichtung durch eine Dämpfungseinrichtung gedämpft ist, so dass nach einem Betätigen des Tipp-Tasters die Beleuchtungseinrichtung langsam in ihre Ausfahrposition ausschwenkt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Innenansicht auf eine Kraftfahrzeugtür mit einer erfindungsgemäßen Beleuchtungseinrichtung,
- Fig. 2: eine Detailansicht aus Fig. 1,
- Fig. 3: eine schematisierte Seitenansicht der erfindungsgemäßen Beleuchtungseinrichtung in deren Einfahrposition,
- Fig. 4: eine Darstellung wie in Fig. 3, jedoch bei ausgefahrener Beleuchtungseinrichtung,
- Fig. 5: einen Querschnitt entlang der Schnittebene V-V,
- Fig. 6: eine Explosionsdarstellung einer möglichen Ausführungsform der erfindungsgemäßen Beleuchtungseinrichtung.

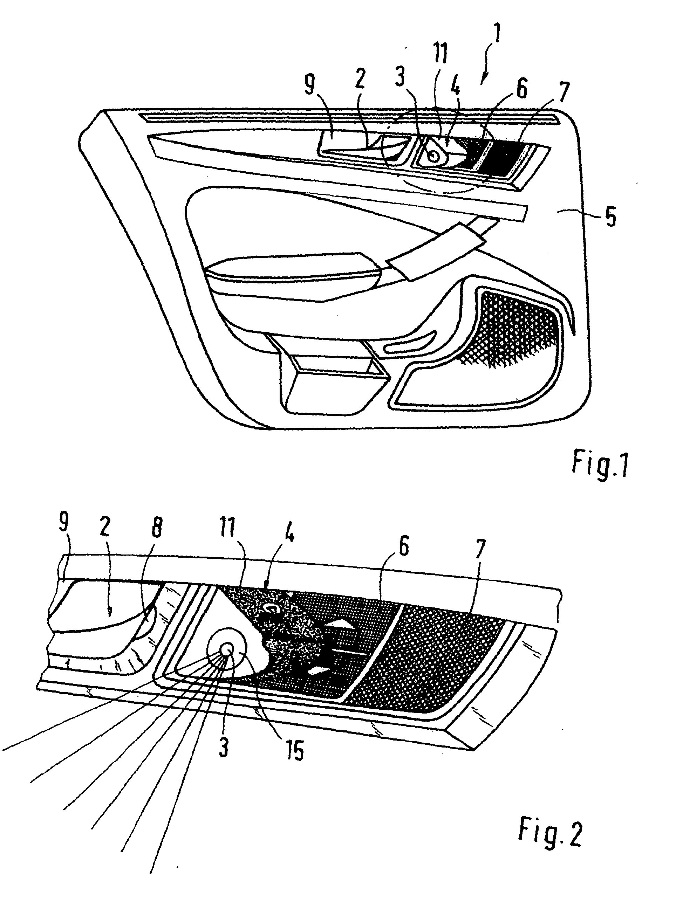

Entsprechend der Fig. 1 weist eine Kraftfahrzeugtür 1 an deren Innenseite eine Türinnenbetätigung 2 zur Türentriegelung und eine mit zumindest einem Leuchtmittel 3 ausgestattete Beleuchtungseinrichtung 4 auf. Sowohl die Türinnenbetätigung 2 als auch die Beleuchtungseinrichtung 4 sind dabei in eine Türinnenverkleidung 5 integriert bzw. an diese angepasst. Die Beleuchtungseinrichtung 4 ist in Fahrtrichtung gesehen vor der Türinnenbetätigung 2 angeordnet, wobei jedoch auch eine andere Anordnung von der Erfindung umschlossen sein soll. Die in Fig. 1 dargestellte Kraftfahrzeugtür 1 kann sowohl als vordere als auch als hintere Seitentür ausgebildet sein. In Fahrtrichtung vor der Beleuchtungseinrichtung 4 ist ein Schaltelement 6, beispielsweise für einen elektrischen Fensterheber, sowie im Anschluss daran ein Lautsprecher 7 vorgesehen. Weitere Komponenten, wie beispielsweise ein Aschenbecher, eine Armlehne etc. sind in üblicher Weise an der Kraftfahrzeugtür 1 angeordnet und im großen und ganzen für die Erfindung nicht relevant.

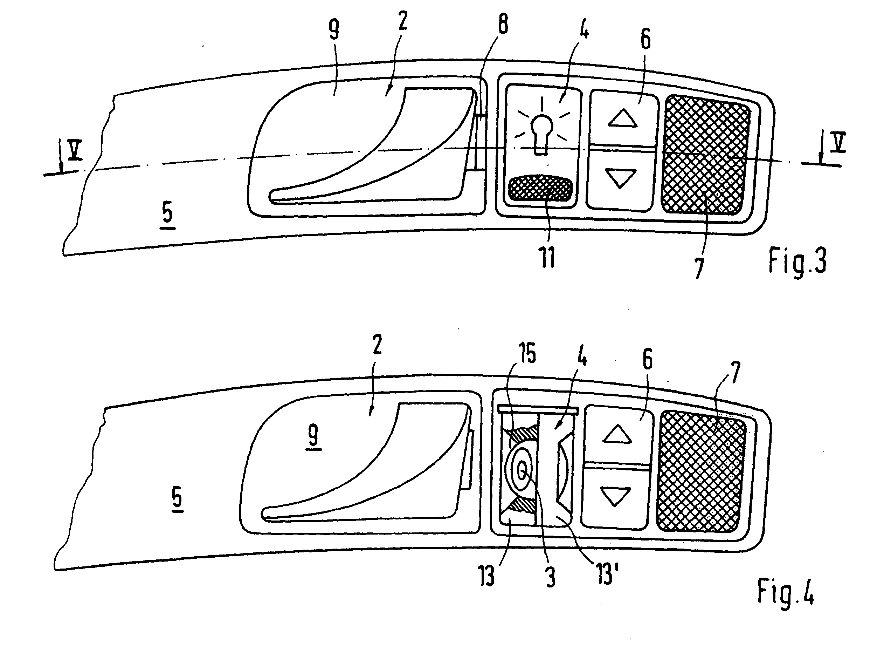

Die Beleuchtungseinrichtung 4 ist zwischen einer Einfahrposition (vgl. Fig. 3), in welcher sie zumindest einen Teil der Türinnenbetätigung 2 beleuchtet, und einer Ausfahrposition (vgl. die Fig. 1, 2 und 4) in welcher sie einen Innenraum des Kraftfahrzeugs beleuchtet, verstellbar an der Kraftfahrzeugtür 1 gelagert. Die Lagerung kann dabei um eine im wesentlichen horizontale Achse erfolgen. Die Beleuchtungseinrichtung 4 kann auch translatorisch geführt sein.

In ihrer Einfahrposition (vgl. Fig. 3) treten Lichtstrahlen vom Leuchtmittel 3 durch einen Durchbruch 8 hindurch, welcher in einer Griffschale 9 der Türinnenbetätigung 2 angeordnet ist, so dass eine indirekte Beleuchtung der Griffschale 9, also eines Teils der Türinnenbetätigung 2, bei sich in ihrer Einfahrposition befindlichen Beleuchtungseinrichtung 4 erzeugt wird. Demgegenüber erzeugt die Beleuchtungseinrichtung 4 in ihrer Ausfahrposition eine Beleuchtung eines Sitzendes bzw. ein Leselicht, welches es einem Fahrzeuginsassen gestattet, auch bei außerhalb des Kraftfahrzeugs herrschender Dunkelheit, problemlos lesen zu können.

Da ein Leselicht normalerweise deutlich leistungsstärker als eine indirekte Beleuchtung für die Türinnenbetätigung 2 ausgebildet sein sollte, kann vorgesehen sein, dass die auf die Griffschale 9 der Türinnenbetätigung 2 auftreffende Lichtleistung bei sich in Einfahrposition befindlicher Beleuchtungseinrichtung 4 im Vergleich zur Lichtleistung der Beleuchtungseinrichtung 4 in Ausfahrposition reduziert ist. Eine derartige Reduzierung kann beispielsweise durch eine entsprechende Dimensionierung des Durchbruchs 8 erreicht werden, so dass lediglich ein prozentualer Anteil des vom Leuchtmittel 3 ausgesandten Lichts durch den Durchbruch 8 hindurchtreten und die Griffschale 9 beleuchten kann. Denkbar ist auch, dass der Durchbruch 8 eine nicht gezeigte und zumindest teilweise transparente Folie aufweist, welche dem durch den Durchbruch bzw. durch die Folie hindurchtretenden Licht Leistung entzieht oder dieses beispielsweise farbig in Richtung der Türinnenbetätigung 2 austreten lässt. Eine derartige Änderung der Farbe des Lichtes der Beleuchtungseinrichtung 4 zwischen deren Einfahr- und Ausfahrposition kann selbstverständlich nicht nur durch entsprechende Folien, sondern auch durch eine entsprechende Auswahl der Leuchtmittel 3 erreicht werden. Denkbar ist hierbei insbesondere der Einsatz von verschiedenfarbigen LED's, welche elektrisch/elektronisch in Abhängigkeit der jeweiligen Aus- bzw. Einfahrposition der Beleuchtungseinrichtung 4 geschaltet werden. So ist vorstellbar, dass die Beleuchtungseinrichtung 4 in deren Einfahrposition gelbes oder rotes, also warmes Licht, in Richtung der Türinnenbetätigung 2 abstrahlt und dadurch eine angenehme Ambientebeleuchtung erzeugt, während die Beleuchtungseinrichtung 4 in deren Ausfahrposition, in welcher sie vorzugsweise zum Lesen benötigt wird, weißes, insbesondere helles Licht abstrahlt.

Eine weitere Möglichkeit der Reduzierung der Lichtleistung des Leuchtmittels 3 in der Einfahrposition der Beleuchtungseinrichtung 4 besteht darin, dass das Leuchtmittel 3 in der Einfahrposition gedimmt wird, wozu beispielsweise eine elektronische Steuerung in der Kraftfahrzeugtür 1 vorgesehen sein kann. Selbstverständlich können auch mehrere Leuchtmittel 3 vorgesehen sein, welche unterschiedlich starke Lichtleistungen aufweisen, so dass beispielsweise ein erstes Leuchtmittel 3 ein Leselicht in der Ausfahrposition der Beleuchtungseinrichtung 4 erzeugt, während ein zweites Leuchtmittel 3 die Ambientebeleuchtung in der Einfahrposition der Beleuchtungseinrichtung 4 erzeugt.

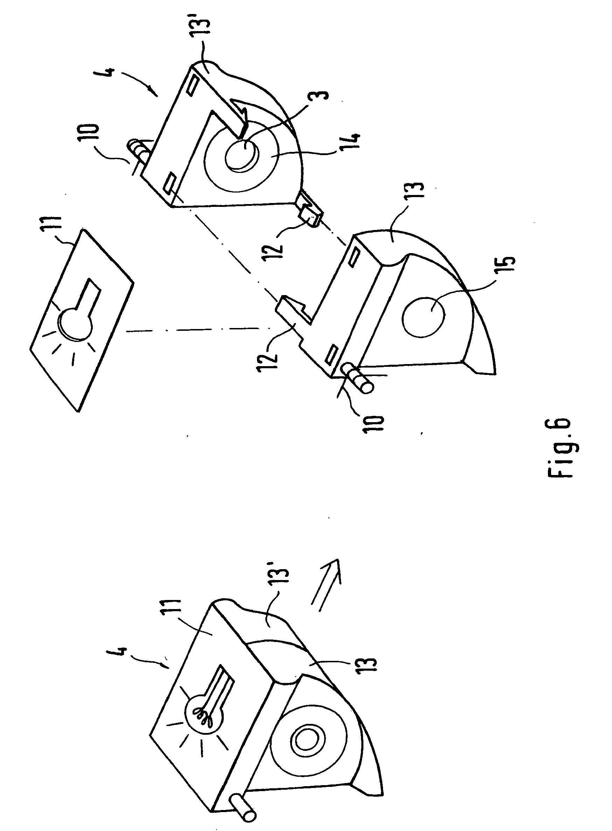

Zum Verstellen der Beleuchtungseinrichtung 4 in deren Ausfahrposition ist vorzugsweise eine Federeinrichtung 10 vorgesehen, welche die Beleuchtungseinrichtung 4 in ihre Ausfahrposition vorspannt. Eine derartige Federeinrichtung 10 ist beispielsweise in Fig. 6 gezeigt. Die Federeinrichtung 10 bewirkt nach einem Antippen der Beleuchtungseinrichtung 4 bzw. deren Blende 11, ein Lösen der Beleuchtungseinrichtung 4 aus deren Einfahrposition und ein selbständiges Verfahren in deren Ausfahrposition. Um einen Schnappeffekt dabei zu verhindern, kann ein nicht gezeigtes Dämpferelement vorgesehen sein, welches die Ausfahrbewegung der Beleuchtungseinrichtung 4 dämpft und ein langsames Ausfahren derselben bewirkt. Ein Drücken auf die Blende 11 der Beleuchtungseinrichtung 4 in deren Einfahrposition bewirkt somit ein Lösen und ein Ausfahren der Beleuchtungseinrichtung 4, während beim Zurückdrücken der Beleuchtungseinrichtung 4 von deren Ausfahrposition in deren Einfahrposition ein Drücken auf die Blende 11 abschließend ein Verrasten der Beleuchtungseinrichtung 4 in deren Einfahrposition bewirkt. Es wird somit ein sogenannter Push-Push- bzw. Tipptast-Mechanismus zur Betätigung der Beleuchtungseinrichtung 4 bereit gestellt.

Gemäß Fig. 6 ist erkennbar, dass die Beleuchtungseinrichtung 4 zwei über lösbare Rastelemente 12 miteinander verbundene Schalenkörper 13 und 13' aufweist, die einen Reflektorraum 14 begrenzen. In dem Reflektorraum 14 ist das Leuchtmittel 3 angeordnet, wobei der Reflektorraum 14 im wesentlichen kugelförmig ausgebildet ist und zumindest teilweise mit lichtreflektierendem Material ausgekleidet ist. Der Schalenkörper 13' nimmt dabei das Leuchtmittel 3 auf, wobei zum Auswechseln des Leuchtmittels 3 entweder die beiden Schalenkörper 13 und 13' voneinander gelöst werden müssen oder ein Entfernen des Leuchtmittels 3 durch eine Öffnung 15 im Schalenkörper 13 möglich ist. Ebenso wie die beiden Schalenkörper 13 und 13' über die Rastelemente 12 miteinander verbunden sind, ist auch denkbar, dass die Blende 11 über nicht gezeigte Rastelemente mit den beiden Schalenkörpern 13 und 13' verrastet, d.h. verbunden ist.

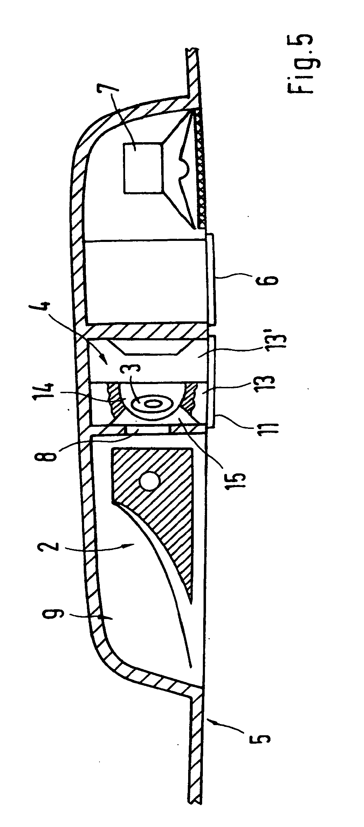

Selbstverständlich ist auch denkbar, dass die Beleuchtungseinrichtung 4 nicht wie in den Fig. 1 bis 6 gezeigt, um eine im wesentlichen horizontale Achse zwischen ihrer Einfahr- und Ausfahrposition verschwenkbar ist, sondern um eine dazu geneigte, insbesondere vertikale Achse.

Zusammenfassend lassen sich die wesentlichen Merkmale der erfindungsgemäßen Lösung wie folgt charakterisieren:

Die erfindungsgemäße Lösung sieht vor, an einer Kraftfahrzeugtür 1 mit einen Türinnenbetätigung 2 zur Türentriegelung und mit mindestens einer Beleuchtungseinrichtung 4, letztere schwenkverstellbar in der Kraftfahrzeugtür 1 zu lagern und zwar derart, dass sie zwischen einer Einfahrposition und einer Ausfahrposition hin und her verschwenkt werden kann. In der Einfahrposition beleuchtet sie dabei ausschließlich die Türinnenbetätigung 2 in der Art einer Ambientebeleuchtung, während sie in der Ausfahrposition ausschließlich einen Innenraum des Kraftfahrzeugs beleuchtet und insbesondere als Leselicht dient.

## Patentansprüche

1. Kraftfahrzeugtür (1) mit einer Türinnenbetätigung (2) zur Türentriegelung und einer mindestens ein Leuchtmittel (3) aufweisende Beleuchtungseinrichtung (4), die zwischen einer Einfahrposition und einer Ausfahrposition verstellbar an der Kraftfahrzeugtür gelagert ist, **dadurch gekennzeichnet, dass** die Beleuchtungseinrichtung (4) in der Einfahrposition ausschließlich die Türinnenbetätigung (2) und in ihrer Ausfahrposition ausschließlich den Innenraum des Kraftfahrzeuges beleuchtet.

2. Kraftfahrzeugtür nach Anspruch 1, **dadurch gekennzeichnet, dass** die Türinnenbetätigung (2) eine Griffschale (9) aufweist, wobei die Beleuchtungseinrichtung (4) benachbart zu dieser Griffschale (9) angeordnet ist und in ihrer Einfahrposition durch einen Durchbruch (8) in der Griffschale (9) die Türinnenbetätigung (2) beleuchtet.

3. Kraftfahrzeugtür nach Anspruch 2, **dadurch gekennzeichnet, dass** der Durchbruch (8) in der Griffschale (9) so dimensioniert ist, dass lediglich ein Teil der Lichtleistung die Türinnenbetätigung (2) erreicht.

4. Kraftfahrzeugtür nach einem der Ansprüche 1 bis 3, **dadurch gekennzeichnet, dass** die Beleuchtungseinrichtung (4) zwischen ihrer Einfahr- und Ausfahrposition verstellbar oder translatorisch bewegbar ist.

5. Kraftfahrzeugtür nach einem der Ansprüche 1 bis 4, **dadurch gekennzeichnet, dass** ein Leuchtmittel (3) der Beleuchtungseinrichtung (4) in der Einfahrposition im Vergleich zur Ausfahrposition gedimmt ist.

6. Kraftfahrzeugtür nach einem der Ansprüche 1 bis 5, **dadurch gekennzeichnet, dass** die Beleuchtungseinrichtung (4) in der Ausfahrposition ein Leselicht erzeugt.

7. Kraftfahrzeugtür nach einem der Ansprüche 1 bis 6, **dadurch gekennzeichnet, dass** die Beleuchtungseinrichtung (4) zwei über lösbare Rastelemente (12) miteinander verbundene Schalenkörper (13,13') aufweist, die einen Reflektorraum (14) begrenzen.

8. Kraftfahrzeugtür nach Anspruch 7, **dadurch gekennzeichnet, dass** zwischen den beiden Schalenkörpern (13, 13') eine Kugel angeordnet ist, in der das Leuchtmittel (3) integriert ist, so dass das Leuchtmittel (3) dreidimensional um einen Kugelmittelpunkt drehbar beweglich ist.

9. Kraftfahrzeugtür nach Anspruch 7, **dadurch gekennzeichnet, dass** in einen der beiden Schalenkörper (13,13') das zumindest eine Leuchtmittel (3) eingebettet ist.

10. Kraftfahrzeugtür nach einem der Ansprüche 1 bis 9, **dadurch gekennzeichnet, dass** eine Federeinrichtung (10) vorgesehen ist, welche die Beleuchtungseinrichtung (4) in ihre Ausfahrposition vorspannt.

11. Kraftfahrzeugtür nach einem der Ansprüche 1 bis 10, **dadurch gekennzeichnet, dass** die Beleuchtungseinrichtung (4) in Fahrtrichtung vor der Türinnenbetätigung (2) angeordnet ist.

## Claims

1. Motor vehicle door (1) with an inner door actuator (2) for unlocking the door and a lighting device (4), which has at least one lamp (3) and is mounted on the motor vehicle door in such a way that it can be displaced between a retracted position and an extended position, **characterized in that**, in the retracted position, the lighting device (4) illuminates only the inner door actuator (2) and, in its extended position, illuminates only the interior of the motor vehicle.

2. Motor vehicle door according to Claim 1, **characterized in that** the inner door actuator (2) has a handle pocket (9), the lighting device (4) being arranged adjacent to this handle pocket (9) and, in its retracted position, illuminating the inner door actuator (2) through an aperture (8) in the handle pocket (9).

3. Motor vehicle door according to Claim 2, **characterized in that** the aperture (8) in the handle pocket (9) is dimensioned in such a way that only part of the light output reaches the inner door actuator (2).

4. Motor vehicle door according to one of Claims 1 to 3, **characterized in that** the lighting device (4) can be displaced or moved in translation between its retracted position and its extended position.

5. Motor vehicle door according to one of Claims 1 to 4, **characterized in that** a lamp (3) of the lighting device (4) is dimmed in the retracted position in comparison with the extended position.

6. Motor vehicle door according to one of Claims 1 to 5, **characterized in that** the lighting device (4) produces a reading light in the extended position.

7. Motor vehicle door according to one of Claims 1 to 6, **characterized in that** the lighting device (4) has two shell elements (13, 13'), which are connected to one another by releasable latching elements (12) and which delimit a reflector space (14).

8. Motor vehicle door according to Claim 7, **characterized in that** a ball, into which the lamp (3) is integrated, is arranged between the two shell elements (13, 13'), allowing the lamp (3) to be moved in three dimensions by rotation about a centre of the ball.

9. Motor vehicle door according to Claim 7, **characterized in that** the at least one lamp (3) is embedded in one of the two shell elements (13, 13').

10. Motor vehicle door according to one of Claims 1 to 9, **characterized in that** a spring device (10) is provided which preloads the lighting device (4) into its extended position.

11. Motor vehicle door according to one of Claims 1 to 10, **characterized in that** the lighting device (4) is arranged in front of the inner door actuator (2) in the direction of driving.

## Revendications

1. Porte de véhicule automobile (1) comprenant une commande intérieure de porte (2) pour le déverrouillage de la porte et un dispositif d'éclairage (4) présentant au moins un moyen d'éclairage (3), qui est monté de manière réglable entre une position rentrée et une position sortie sur la porte du véhicule automobile, **caractérisée en ce que** le dispositif d'éclairage (4), dans la position rentrée, éclaire exclusivement la commande intérieure de la porte (2), et dans sa position sortie, éclaire exclusivement l'habitacle du véhicule automobile.

2. Porte de véhicule automobile selon la revendication 1, **caractérisée en ce que** la commande intérieure de la porte (2) présente une coque de préhension (9), le dispositif d'éclairage (4) étant disposé à côté de cette coque de préhension (9), et dans sa position rentrée, éclairant la commande intérieure de la porte (2) à travers un orifice (8) dans la coque de préhension (9).

3. Porte de véhicule automobile selon la revendication 2, **caractérisée en ce que** l'orifice (8) dans la coque de préhension (9) est dimensionné de telle sorte que seulement une partie de la puissance d'éclairage atteigne la commande intérieure de la porte (2).

4. Porte de véhicule automobile selon l'une quelconque des revendications 1 à 3, **caractérisée en ce que** le dispositif d'éclairage (4) peut être réglé ou déplacé en translation entre sa position rentrée et sa position sortie.

5. Porte de véhicule automobile selon l'une quelconque des revendications 1 à 4, **caractérisée en ce qu'**un moyen d'éclairage (3) du dispositif d'éclairage (4) est affaibli dans la position rentrée par rapport à la position sortie.

6. Porte de véhicule automobile selon l'une quelconque des revendications 1 à 5, **caractérisée en ce que** le dispositif d'éclairage (4) produit une lumière de lecture dans la position sortie.

7. Porte de véhicule automobile selon l'une quelconque des revendications 1 à 6, **caractérisée en ce que** le dispositif d'éclairage (4) présente deux corps de coque (13, 13') connectés l'un à l'autre par le biais d'éléments d'encliquetage détachables (12), lesquels corps de coque limitent un espace de réflecteur (14).

8. Porte de véhicule automobile selon la revendication 7, **caractérisée en ce qu'**entre les deux corps de coque (13, 13') est disposée une boule dans laquelle le moyen d'éclairage (3) est intégré, de sorte que le moyen d'éclairage (3) puisse être tourné de manière tridimensionnelle autour d'un centre de la boule.

9. Porte de véhicule automobile selon la revendication 7, **caractérisée en ce que** dans l'un des deux corps de coque (13, 13') est incorporé l'au moins un moyen d'éclairage (3).

10. Porte de véhicule automobile selon l'une quelconque des revendications 1 à 9, **caractérisée en ce qu'**il est prévu un dispositif de ressort (10) qui précontraint le dispositif d'éclairage (4) dans sa position sortie.

11. Porte de véhicule automobile selon l'une quelconque des revendications 1 à 10, **caractérisée en ce que** le dispositif d'éclairage (4) est disposé dans la direction de conduite avant la commande intérieure de la porte (2).
